# EUROPEAN PATENT APPLICATION

(11) **EP 4 478 086 A1**
(43) Date of publication of application: **18.12.2024**
(21) Application number: 22925891.8
(22) Date of filing: 10.02.2022
(51) Int. Cl.: G01S 7/497, G01S 17/89, G01S 17/931

(54) **INFORMATION PROCESSING DEVICE, CONTROL METHOD, PROGRAM, AND STORAGE MEDIUM**

(71) Applicant: Pioneer Corporation, Tokyo 113-0021 (JP); Pioneer Smart Sensing Innovations Corporation, Tokyo 113-0021 (JP)
(72) Inventor: NOGUCHI, Ryoji, Kawagoe-shi, Saitama 350-8555 (JP)
(74) Representative: Viering, Jentschura & Partner mbB Patent- und Rechtsanwälte
(86) International application number: PCT/JP2022/005352
(87) International publication number: WO 2023/152870

(57) **Abstract**

The information processing device 1 functionally includes an acquisition means, a detection means, and a processing means. The acquisition means is configured to acquire point cloud information which is a set of data representing a point measured by a measurement device for each measurement direction. The detection means is configured to detect a predetermined degree or more of fluctuation in the measurement device. The processing means is configured to determine, based on whether the fluctuation is detected or not, a search range for searching for a corresponding point of the point cloud information obtained at a preceding processing time, wherein the corresponding point corresponds to each point of the point cloud information obtained at a current processing time.

## Description

### TECHNICAL FIELD

The present disclosure relates to processing of measured data.

### BACKGROUND

Conventionally, there is known a ranging device configured to radiate a light to a target object of measurement to detect the reflected light from the target object of measurement, and thereby calculate the distance to the target object of measurement based on the time difference between the timing of radiating the light to the target object of measurement and the timing of detecting the reflected light from the target object of measurement. Patent Literature 1 discloses a forward vehicle recognition device for detecting the distance to the forward vehicle and the inclination by changing the lighting pattern for the projecting a patterned light based on the detection state of the patterned light.

### PRIOR ART DOCUMENTS

### PATENT LITERATURE

Patent Literature 1: JP 2008-082750A

### SUMMARY

### PROBLEM TO BE SOLVED BY THE INVENTION

In such a situation that a vehicle equipped with a measurement device such as a lidar passes through a road with bumps, the inclination of the measurement device is greatly fluctuated, and therefore it becomes difficult to associate the point cloud information which the measurement device outputs before the fluctuation with the point cloud information which the measurement device outputs after the fluctuation.

The above-described issue is an example of the issues which the present disclosure has been made to solve, and it is an example object of the present invention to provide an information processing device, a control method, a program, and a storage medium storing a program capable of suitably processing the point cloud information outputted by a measurement device even when there is a fluctuation in the measurement device.

### MEANS FOR SOLVING THE PROBLEM

One invention is an information processing device including:
an acquisition means configured to acquire point cloud information, which is a set of data representing a point measured for each measurement direction by a measurement device;
a detection means configured to detect a predetermined degree or more of fluctuation in the measurement device; and
a processing means configured to determine, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time.

Another invention is a control method executed by a computer, the control method including:
acquiring point cloud information, which is a set of data representing a point measured for each measurement direction by a measurement device;
detecting a predetermined degree or more of fluctuation in the measurement device; and
determining, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time.

Still another invention is a program causing a computer to:
acquire point cloud information, which is a set of data representing a point measured for each measurement direction by a measurement device;
detect a predetermined degree or more of fluctuation in the measurement device; and
determine, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time.

### BRIEF DESCRIPTION OF THE DRAWINGS

[FIG. 1] It illustrates a schematic configuration of a lidar according to the first embodiment.
[FIG. 2] It is an example of a flowchart according to the first embodiment.
[FIGS. 3A and 3B] FIG. 3A illustrates an example of the search range without considering the pitch fluctuation.
FIG. 3B illustrates an example of a search range which is set when the fluctuation is detected in the fluctuation detection process.
[FIG. 4] It illustrates a schematic configuration of a lidar according to the second embodiment.
[FIG. 5] It illustrates an example of a flowchart according to the second embodiment.
[FIG. 6] It is a configuration diagram of a lidar system according to the third embodiment.

### DETAILED DESCRIPTION OF PREFERRED EMBODIMENTS

According to a preferred embodiment of the present invention, the information processing device includes: an acquisition means configured to acquire point cloud information, which is a set of data representing a point measured for each measurement direction by a measurement device; a detection means configured to detect a predetermined degree or more of fluctuation in the measurement device; and a processing means configured to determine, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time. According to this mode, even when a fluctuation in the measurement device comes up, the information processing device can suitably set the search range having an accurate correspondence between the first point cloud information corresponding to the current processing time and the second point cloud information corresponding to the preceding processing time.

In an aspect of the information processing device, upon detecting the fluctuation, the processing means is configured to expand the search range in a direction in which the fluctuation occurred. According to this aspect, the information processing device can set the search range having an accurate correspondence between the first point cloud information and the second point cloud information, based on the direction in which the fluctuation occurred.

In another aspect of the information processing device, the detection means is configured to detect the fluctuation in at least one of a pitch direction, a yaw direction and/or a roll direction of the measurement device. As such, the information processing device can set the search range in accordance with the fluctuation in the pitch direction, the yaw direction, or the roll direction of the measurement device.

In another aspect of the information processing device, the processing means is configured to detect the direction of the fluctuation among positive directions or negative directions of the pitch direction, the yaw direction, or the roll direction, and expand the search range in a direction opposite to the detected direction. Thus, the information processing device can expand the search range in a necessary direction when the fluctuation is detected.

In another aspect of the information processing device, the detection means is configured to detect the fluctuation based on the first point cloud information and the second point cloud information. In a preferred embodiment, the detection means is configured to detect the fluctuation based on a matching result between the first point cloud information and the second point cloud information based on ground points which are the points representing a ground. In another preferred embodiment, the detection means is configured to detect the fluctuation based on a matching result between the first point cloud information and the second point cloud information based on the points representing measurement distances equal to or longer than a predetermined distance. With these aspects, the information processing device can preferably detect the fluctuation of the measurement device.

In another aspect of the information processing device, the detection means is configured to detect the fluctuation based on a detection signal outputted by a sensor, which is provided in the measurement device or a moving object in which the measurement device is provided. According to this aspect, the information processing device can preferably detect the fluctuation of the measurement device.

In another preferred embodiment of the present invention, there is provided a control method executed by an information processing device, the control method including: acquiring point cloud information, which is a set of data representing a point measured for each measurement direction by a measurement device; detecting a predetermined degree or more of fluctuation in the measurement device; and determining, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time. By executing the control method, the information processing device can suitably set the search range having an accurate correspondence between the first point cloud information corresponding to the current processing time and the second point cloud information corresponding to the preceding processing time.

In another preferred embodiment of the present invention, there is provided a program causing a computer to: acquire point cloud information, which is a set of data representing a point measured for each measurement direction by a measurement device; detect a predetermined degree or more of fluctuation in the measurement device; and determine, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time. By executing the program, the computer can suitably set the search range having an accurate correspondence between the first point cloud information corresponding to the current processing time and the second point cloud information corresponding to the preceding processing time. In some embodiments, the program is stored in a storage medium.

### EMBODIMENTS

Hereinafter, preferred embodiments of the present invention are described below with reference to drawings.

### <First Example>

### (1) Device Configuration

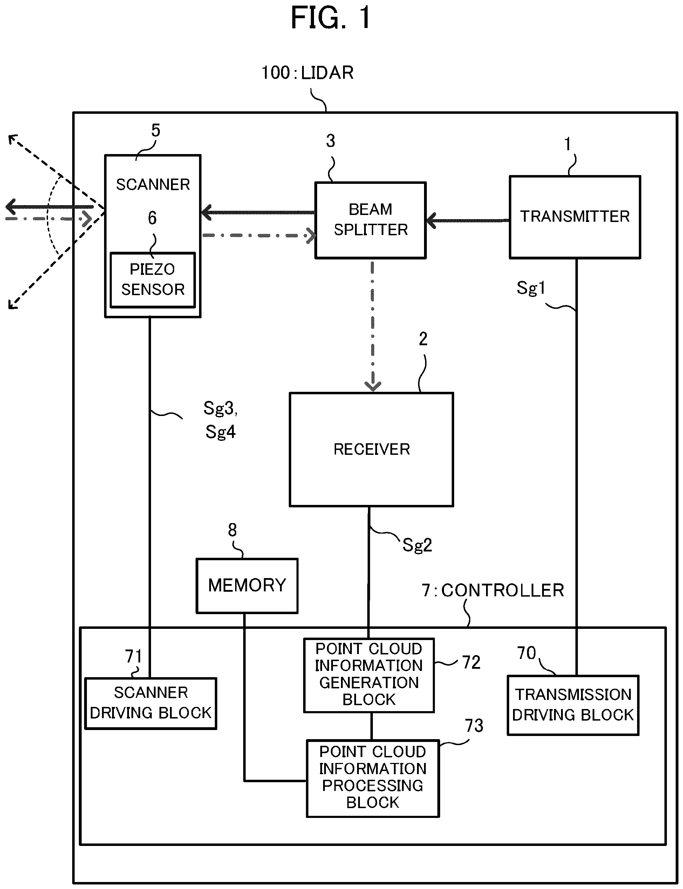

FIG. 1 shows a schematic configuration of a lidar 100 according to the first embodiment. The lidar 100 is, for example, mounted on a vehicle that performs driving support such as autonomous driving. The lidar 100 radiates the laser light with respect to a predetermined angle range in the horizontal and vertical directions, and by receiving the returned light (also referred to as "reflected light") which is the laser light reflected at an object, the lidar 100 discretely measures the distance from the lidar 100 to the object and generates point cloud information indicating three-dimensional positions of the object.

As shown in FIG. 1, the lidar 100 mainly includes a transmitter 1, a receiver 2, a beam splitter 3, a scanner 5, a piezo sensor 6, a controller 7, and a memory 8.

The transmitter 1 is a light source configured to emit a pulsed laser light toward the beam splitter 3. For example, the transmitter 1 includes an infrared laser emitting element. The transmitter 1 is driven based on the driving signal "Sg1" supplied from the controller 7.

The receiver 2 is, for example, an avalanche photodiode (Avalanche Photo-Diode), and generates a detection signal "Sg2" corresponding to the amount of received light, and supplies the generated detection signal Sg2 to the controller 7.

The beam splitter 3 is transparent to the pulsed laser light emitted from the transmission unit 1. In contrast, the beam splitter 3 reflects the light reflected by the scanner 5 toward the receiver 2.

The scanner 5 is, for example, a mirror (MEMS mirror) according to an electrostatic drive system, based on the driving signal "Sg3" supplied from the controller 7, the inclination (i.e., the optical scanning angle) of the scanner 5 is changed within a predetermined range. Then, the scanner 5 reflects the laser light, which passed through the beam splitter 3, toward the outside of the lidar 100, and reflects the reflected light incident from the outside of the lidar 100 toward the beam splitter 3. Further, a point, or its measurement data, measured through irradiation with the laser light within the measurement range of the lidar 100 is also referred to as "measured point".

The scanner 5 is also provided with the piezo sensor 6. The piezo sensor 6 detects the strain caused by the stress of the torsion bar which supports the mirror part of the scanner 5. The piezo sensor 6 supplies the generated detection signal "Sg4" to the controller 7. The detection signal Sg4 is used to detect the orientation of the scanners 5.

The memory 8 is configured by various volatile memories such as a RAM (Random Access Memory), a ROM (Read Only Memory), a flash memory, and a non-volatile memory. The memory 8 stores a program which is necessary for the controller 7 to execute a predetermined process. The memory 8 stores various parameters referred to by the controller 7. Further, the memory 8 stores point cloud information equivalent to a predetermined number of latest frames generated by the controller 7.

The controller 7 includes various processors such as a CPU (Central Processing Unit) and a GPU (Graphics Processing Unit). The controller 7 executes a program stored in the memory 8 to execute a predetermined process. The controller 7 is an example of a computer for executing a program. The controller 7 is not limited to be implemented by software using a program, it may be implemented by any combination of hardware, firmware, software and/or the like. The controller 7 may also be a user-programmable integrated-circuit, such as a FPGA (Field-Programmable Gate Array) and a microcontroller, an ASSP (Application Specific Standard Produce) and an ASIC (Application Specific Integrated Circuit).

The controller 7 functionally includes a transmission driving block 70, a scanner driving block 71, a point cloud information generation block 72, and a point cloud information processing block 73.

The transmission driving block 70 outputs a driving signal Sg1 for driving the transmitter 1. The driving signal Sg1 includes information regarding a light emission time of the laser light emitting element included in the transmitter 1 and information for controlling the emission intensity of the laser light emitting element. Based on the driving signal Sg1, the transmission driving block 70 controls the emission intensity of the laser light emitting element included in the transmitter 1.

The scanner driving block 71 outputs a driving signal Sg3 for driving the scanner 5. The driving signal Sg3 includes a horizontal driving signal corresponding to the resonant frequency of the scanner 5 and a vertical driving signal for vertical scanning. The scanner driving block 71 also detects the scan angle of the scanner 5 (i.e., the emission direction of the laser light) by monitoring the detection signal Sg4 outputted from the piezo sensor 6.

Based on the detection signal Sg2 supplied from the receiver 2, the point cloud information generation block 72 generates point cloud information indicative of, with respect to each measurement direction (i.e., emitting direction of the laser light), a distance (measurement distance) from the lidar 100, which is a reference point, to an object irradiated with the laser light. In this case, the point cloud information generation block 72 calculates, as the time of flight (Time of Flight) of the light, the time from the emission of the laser light to the detection of the reflected light by the receiver 2. Then, the point cloud information generation block 72 generates point cloud information which indicates a set of points each corresponding to a combination of: the measurement distance in accordance with the calculated time of flight; and the emitting direction (measurement direction) of the laser light received as the reflected light by the receiver 2. Then, the point cloud information generation block 72 supplies the generated point cloud information to the point cloud information processing block 73. Hereafter, point cloud information obtained in one cycle of the scanning for all measured points is also referred to as a frame of point cloud information. The point cloud information can be regarded as an image, wherein each pixel of the image corresponds to each measurement direction and the pixel value of the each pixel is set as the measurement distance in the each measurement direction. In this case, pixels arranged in the vertical direction correspond to different emitting directions of the laser light in the elevation / depression angle and pixels arranged in the horizontal direction correspond to different emitting directions of the laser light in the horizontal angle. Then, the coordinate value, in the three-dimensional coordinate system with reference to the lidar 100, of each pixel is obtained based on a combination of the corresponding emitting direction and measurement distance.

The point cloud information processing block 73 removes noise data (false alarm data) generated by erroneously detecting an object in the point cloud information. Hereafter, any measured point corresponding to data generated by detecting an existing object is referred to as "valid point", any measured point (i.e., the measured point corresponding to the noise data) which is not a valid point is referred to as "invalid point". The point cloud information processing block 73 searches for measured points having a correspondence between the frame (also referred to as "current frame") of the point cloud information obtained at the current processing time and a frame (also referred to as "past frame") of the point cloud information obtained in the past, and determine whether or not each measured point is a valid point, based on the search result. Furthermore, in this case, upon detecting a fluctuation in the pitch direction of the lidar 100, the point cloud information processing block 73 expands the target range (search range) of search, thereby to accurately make the determination as to the valid points regardless of the presence or absence of the positional fluctuation of the lidar 100. The current frame is an example of the "first point cloud information", and the past frame is an example of the "second point cloud information". The point cloud information processing block 73 is an example of "acquisition means", "detection means" and "processing means". Further, the lidar 100 from which the point cloud information processing block 73 is excluded is an example of the "measurement device".

As an example mode of removing the noise data, the point cloud information processing block 73 may add, to the point cloud information, flag information indicating whether or not each measured point is a valid point, instead of removing the noise data from the point cloud information. Further, the point cloud information processing block 73 may supplies the processed point cloud information to an external device existing outside the lidar 100 or to any other processing block in the lidar 100 for performing obstacle detection or the like. In the former case, for example, the point cloud information may be outputted to a device (also referred to as "driving support device") configured to control the driving support such as autonomous driving of a vehicle. In this case, for example, based on the point cloud information, the control of the vehicle may be performed so as to avoid at least the obstacle points. For example, the driving support device may be an ECU (Electronic Control Unit) of the vehicle, or may be a vehicle-mounted device such as a car navigation device electrically connected to the vehicle. The point cloud information processing block 73 stores each frame of the point cloud information in the memory 8 in association with the time information indicating the processing time for each frame. It is noted that the lidar 100 is not limited to a scan type lidar configured to scan the field of view with a laser light, and it may be a flash type lidar configured to generate three-dimensional data by diffusively radiating a laser light to the field of view of two-dimensional array structure sensor.

### (2) Processing Overview

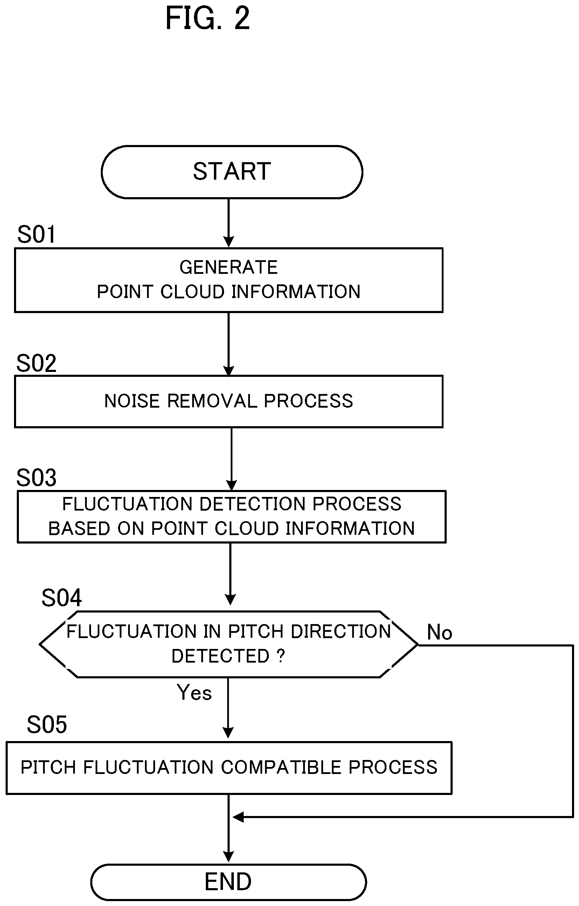

FIG. 2 is an example of a flowchart illustrating a procedure of the process (point cloud information process) related to the point cloud information. The lidar 100 repeatedly executes the point cloud information process for each cycle of generating a frame of the point cloud information.

First, based on the detection signal Sg2, the point cloud information generation block 72 generates point cloud information (step S01). In this instance, the point cloud information generation block 72 generates the current frame of the point cloud information on the basis of the detection signal Sg2 generated during one-cycle scanning in the target area of scanning by the lidar 100.

Next, the point cloud information processing block 73 executes the noise removal process which is a process of removing the noise data from the point cloud information generated at step S01 (step S02). In this case, for example, based on the current frame and the past frame, the point cloud information processing block 73 determines whether or not each measured point in the current frame is a valid point. For example, for each valid point in the past frame, the point cloud information processing block 73 sets a range (also referred to as "search range") for searching for measured points having a correspondence between the current frame and the past frame. Then, the point cloud information processing block 73 searches for such measured point(s) in the current frame that the difference in the measurement distance between the each valid point and the measured point is equal to or smaller than a predetermined distance difference. Then, the point cloud information processing block 73 sets, as a valid point, any measured point in the current frame having a similar measurement distance to a predetermined number or more of the valid points in the past frame, while setting any other measured point as an invalid point. The search range herein (i.e., which corresponds to the normal search range described below) is set without consideration of the fluctuation of the lidar 100 in the pitch direction. Thus, some measured points could be determined to be invalid points although they are actually valid points. Such measured points will be corrected to be valid points through pitch fluctuation compatible process to be described later.

The point cloud information processing block 73 may perform any noise removal processing based on the current frame of the point cloud information, without using a past frame of the point cloud information. For example, the point cloud information processing block 73 may determine that any measured point, at which the intensity of the reflection light received by the receiving unit 2 is smaller than a predetermined threshold value, is a valid point. In another example, the point cloud information processing block 73 may apply a clustering method based on Euclidean distance to the measured points according to their measurement distances, and then determines that any measured point belonging to a cluster having less than a predetermined number of elements is an invalid point.

Next, the point cloud information processing block 73 executes the fluctuation detection process, which is the process of detecting the fluctuation in the pitch direction of the lidar 100, based on the point cloud information (step S03). Thus, the point cloud information processing block 73 accurately detects the fluctuation if the lidar 100 fluctuates in the pitch direction due to the passage of the vehicle through a bump or a step or the like.

Upon detecting the fluctuation in the pitch direction through the fluctuation detection process (step S04; Yes), the point cloud information processing block 73 executes the pitch fluctuation compatible process that is a determination process as to the valid points on the assumption that there is a fluctuation in the pitch direction of the lidar 100 (step S05). In this case, the point cloud information processing block 73 sets a search range for searching for a measured point having a correspondence between the current frame and the past frame, and then, based on the search result in the search range, sets a part of the measured points, which were determined to be invalid points at step S02, to be valid points. On the other hand, if the fluctuation in the pitch direction is not detected through the fluctuation detection process (step S04; No), the point cloud information processing block 73 terminates the process of the flowchart.

### (3) Fluctuation Detection Process

Next, specific examples of the fluctuation detection process, based on the point cloud information, executed by the point cloud information processing block 73 at step S03 will be described.

The point cloud information processing block 73 performs matching (registration) between the valid points in the past frame (e.g., the past frame at the preceding processing time) and the valid points in the current frame determined to be valid points in the noise removal process. Then, based on the result of the matching (registration result), upon determining that the variation width (i.e., the number of horizontal scanning lines, or, the shifted number of pixels in the vertical direction when the point cloud information is regarded as an image) in the pitch direction from the past frame is equal to or larger than a predetermined width, the point cloud information processing block 73 determines that there is a fluctuation in the pitch direction of the lidar 100.

The point cloud information processing block 73 may determine matching target (registration target) to be any one of the following: every valid point; measured points (referred to as "ground points") representing the ground; clusters generated based on clustering of valid points; or measured points corresponding to a detected object when an object detection process (instance segmentation, etc.) has been performed. In this case, the point cloud information processing block 73 may perform matching of the matching target based on an arbitrary matching method (optimization method) and calculate the above-described variation width. If the above-described matching is performed based on the ground points, for example, the point cloud information processing block 73 estimates a plane representing the ground based on the valid points determined in the noise removal process at step S02, and then determines valid points, which exist at positions higher than a predetermined threshold value from the plane, to be obstacle points while determining the other valid points as the ground points. Then, the point cloud information processing block 73 calculates the variation width between the ground points in the current frame and the ground points in the past frame.

The point cloud information processing block 73 may use the entire field of view of the lidar 100 as the target space of the matching described above, or may uses a space apart therefrom by a predetermined distance or more. Generally, when there is a fluctuation in the pitch direction of the lidar 100, the above-described variation width in the pitch direction increases with increasing distance to an object. Therefore, for example, the point cloud information processing block 73 may apply the matching to valid points (or cluster or object) which satisfies a condition that the measurement distance is equal to or larger than a predetermined distance.

If the tracking is performed in units of an object or a cluster, the point cloud information processing block 73 may detect the fluctuation in the pitch direction of the lidar 100 on the basis of the result of the tracking. In this case, the point cloud information processing block 73 predicts the position of the object or the cluster in the current frame from the past frame. Then, upon detecting that the deviation width in the pitch direction between the predicted position and the actual position in the current frame is equal to or longer than a predetermined width, the point cloud information processing block 73 determines that there is a fluctuation in the pitch direction of the lidar 100.

### (4) Setting Search Range

Next, a description will be given of the detailed pitch fluctuation compatible process to be executed at step S05. In the pitch fluctuation compatible process, upon detecting a fluctuation in the fluctuation detection process, the point cloud information processing block 73 searches for measured points in the current frame which correspond to valid points in the past frame, based on the longitudinally-enlarged search range corresponding to the pitch direction in which the fluctuation occurs. Thus, even when there is a fluctuation in the pitch direction of the lidar 100 due to bump or steps passed through by the vehicle, the point cloud information processing block 73 searches for the measured points having a correspondence between the past frame and the current frame, to thereby make an accurate determination as to the valid points.

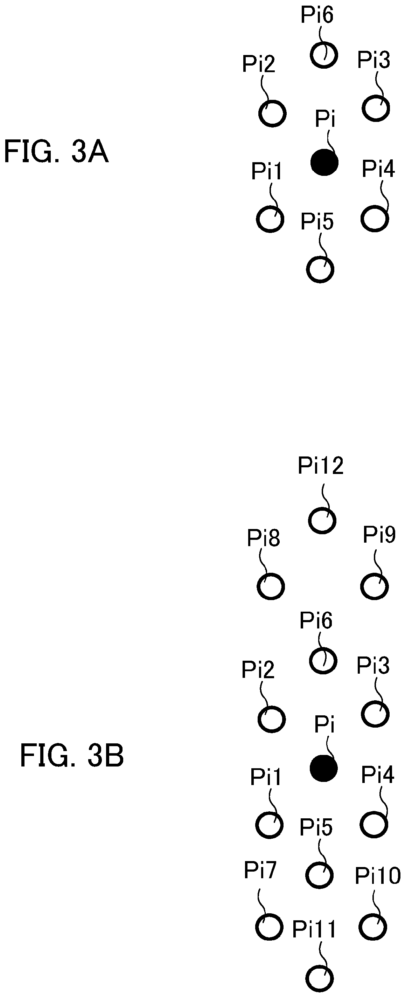

FIG. 3A illustrates an example of a search range (also referred to as "normal search range") in which the pitch fluctuation is not considered. The points Pi and Pi1 to Pi6 in FIG. 3A are measured points represented in a virtual two-dimensional plane facing the lidar 100.

The point cloud information processing block 73 sets a normal search range in performing the noise removal process at step S02, and searches for measured points in the current frame which correspond to valid points in the past frame. Specifically, the point cloud information processing block 73 sets every valid point of the past frame as an attention point Pi in order and sets the normal search area for the set target point Pi. Then, the point cloud information processing block 73 compares the measured distance of each point Pi1 to Pi6 in the current frame that exist in the normal search range with the measured distance of the attention point Pi in the past frame. Then, the point cloud information processing block 73 sets, as a valid point, any measured point in the current frame having a similar measurement distance to a predetermined number of valid points in the past frame while setting any other measured point in the current frame as an invalid point.

It is noted that the points Pi1 to Pi6 within the normal search range have similar measurement directions in the horizontal direction and the vertical direction to the measurement direction of the attention point Pi. Specifically, the point Pi2 and point Pi3 exist on the left and right one-line above the attention point Pi and the point Pi6 exists at the same position two-line above the attention point Pi. The point Pi1 and point Pi4 exists on the left and right one-line below the attention point Pi and the point Pi5 exists at the same position two-lines below the attention point Pi.

FIG. 3B illustrates an example of a search range (also referred to as "existing fluctuation search range") which is set when a fluctuation is detected in the fluctuation detection process. In this case, the point cloud information processing block 73 sets the existing fluctuation search range obtained by expanding the normal search range in the vertical direction, which corresponds to the pitch direction in which the fluctuation regarding the lidar 100 occurs. Specifically, the existing fluctuation search range is set to a range including not only the normal search range but also the points Pi8 and Pi9 three-lines above the attention point Pi, the point Pi12 four-lines above the attention point Pi, the points Pi7 and Pi 10 three-lines below the attention point Pi, and the point Pi11 four-lines below the attention point Pi.

Then, during the pitch fluctuation compatible process, the point cloud information processing block 73 sets every valid point of the past frame as the attention point Pi in order, and searches for such a measured point, in the current frame, that the difference in the measurement distance between the measured point and the attention point of the past frame is equal to or smaller than a predetermined distance difference. Then, as a result of the above search, the point cloud information processing block 73 sets, as a valid point, a measured point (specifically, a point determined to be an invalid point in the noise removal process) in the current frame which satisfies the condition that the difference in the measurement distance between the measured point and the attention point of the past frame is equal to or smaller than the predetermined distance difference. The point cloud information processing block 73 may perform the above-described pitch fluctuation compatible process using the past frame corresponding to the preceding processing time which is one frame before the current frame, or may perform the above-described pitch fluctuation compatible process using multiple past frames corresponding to multiple processing times. In this case, the point cloud information processing block 73 may set, as a valid point, a measured point in the current frame corresponding to any one valid point in the past frames.

As described above, upon detecting the fluctuation in the fluctuation detection process, the point cloud information processing block 73 performs the pitch fluctuation compatible process based on the existing fluctuation search range whose vertical direction corresponding to the fluctuating pitch direction is enlarged from the normal search range. Thus, when there is a fluctuation in the pitch direction of the lidar 100 due to bumps or steps passed through by the vehicle, the point cloud information processing block 73 accurately searches for measured points having a correspondence between the past frame and the current frame to thereby accurately make the determination as to the valid points.

In some embodiments, the point cloud information processing block 73 may set the existing fluctuation search range in accordance with whether the direction of the fluctuation is the positive direction of the pitch direction (e.g., the direction in which the elevation angle increases) or the negative direction (the direction in which the depression angle increases), i.e., in accordance with the temporal change of the fluctuation. For example, upon detecting that the lidar 100 has shifted in the direction in which the elevation angle increases, the point cloud information processing block 73 sets the existing fluctuation search range obtained by enlarging the normal search range downward since each object moves relatively downward in the current frame. Similarly, upon detecting that the lidar 100 has shifted in the direction in which the depression angle increases, the point cloud information processing block 73 the point cloud information processing block 73 sets the existing fluctuation search range obtained by enlarging the normal search range upward since each object moves relatively upward in the current frame. In this way, the point cloud information processing block 73 sets the existing fluctuation search range obtained by expanding the normal search range in the opposite direction to the direction of the fluctuation (in this case, either the positive direction or the negative direction of the pitch direction). Thus, it is possible to set the search range according to the fluctuation of the lidar 100.

### (5) Modifications

Next, a description will be given of preferred modifications to the above-described embodiment. The following modifications may be applied to the above-described embodiment in combination.

### (First Modification)

The point cloud information processing block 73 may detect the fluctuation of the lidar 100 in the yaw direction or the roll direction in addition to or instead of the process for detecting the fluctuation in the pitch direction of the lidar 100. In this case, upon detecting the fluctuation, the point cloud information processing block 73 executes the same process as in the pitch fluctuation compatible process using the past frame and the current frame on the basis of the existing fluctuation search range obtained by expanding the search range in the direction according to the direction of the detected fluctuation. Thus, even when the fluctuation of the lidar 100 other than the pitch direction occurs, the point cloud information processing block 73 can accurately determine the valid points in the current frame.

### (Second Modification)

The search range described above is not used only for the determination as to presence or absence of a counterpart of the valid point in the past frame in the noise removal process. For example, the point cloud information processing block 73 may expand the search range in accordance with the fluctuation of the lidar 100 when the search range is used in object detection (including tracking).

For example, in tracking a target object, the point cloud information processing block 73 sets a search range based on a predicted position of the target object or the cluster to be tracked in the current frame, on the basis of a detection result of the target object in the past frame using an arbitrary tracking technique, and searches for the target object within the search range in the current frame. In this case, upon detecting the fluctuation in the fluctuation detection process, the point cloud information processing block 73 expands the search range (existing fluctuation search range) to be larger than the normal search range. Thus, the point cloud information processing block 73 can appropriately execute the tracking even when the fluctuation occurs in the lidar 100 due to the passage of the vehicle through bumps or steps.

### <Second Embodiment>

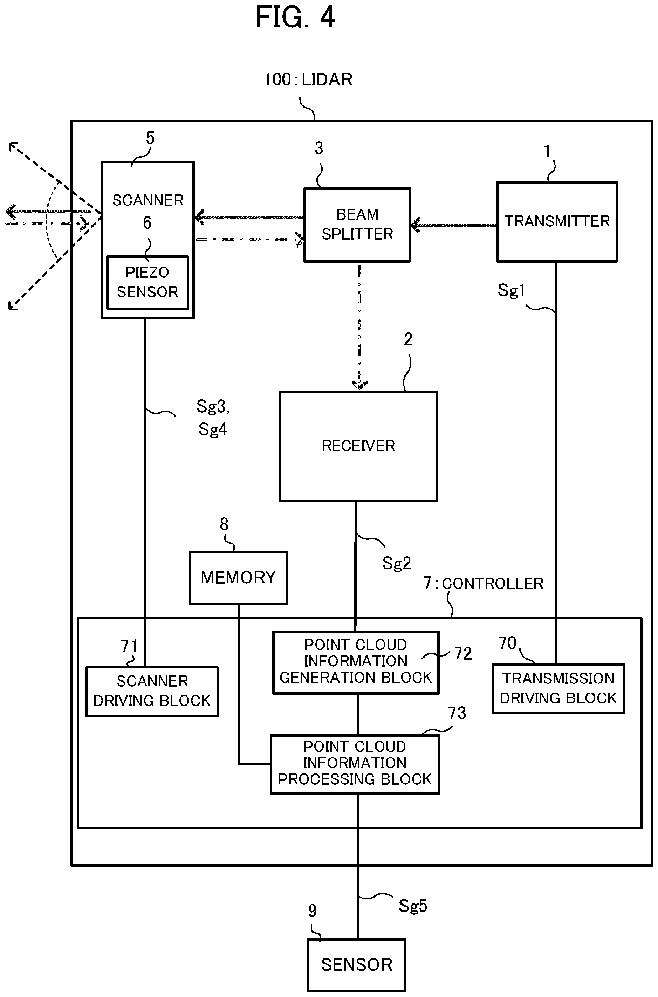

FIG. 4 illustrates a schematic configuration of a lidar 100A according to the second embodiment. The lidar 100A is different from the lidar 100 according to the first embodiment in that the lidar 100A performs the fluctuation detection process based on information outputted by the sensor 9, which is one or more sensors provided in the lidar 100A or the vehicle equipped with the lidar 100A. Hereinafter, the same components of the lidar 100A as the lidar 100 according to the first embodiment are appropriately denoted by the same reference numerals, and a description thereof will be omitted.

The sensor 9 is one or more sensors provided in the lidar 100A or the vehicle equipped with the lidar 100A, and detects the fluctuation of the vehicle or the lidar 100A. The sensor 9 may include an acceleration sensor, or may include any other sensor that is intended for vibration detection. The sensor 9 supplies the detection signal Sg5 to the point cloud information processing block 73.

Based on the detection signal Sg5, the point cloud information processing block 73 executes the fluctuation detection process that is a process of detecting a predetermined degree or more of fluctuation in the pitch direction of the lidar 100A. For example, upon determining that the degree of the vibration indicated by the detection signal Sg5 is equal to or larger than a predetermined degree, the point cloud information processing block 73 detects that the lidar 100A fluctuates in the pitch direction. Then, upon detecting a fluctuation in the fluctuation detection process, the point cloud information processing block 73 performs the noise removal process using the existing fluctuation search range. In contrast, if a fluctuation is not detected in the fluctuation detection process, the point cloud information processing block 73 performs a noise removal process using the normal search range.

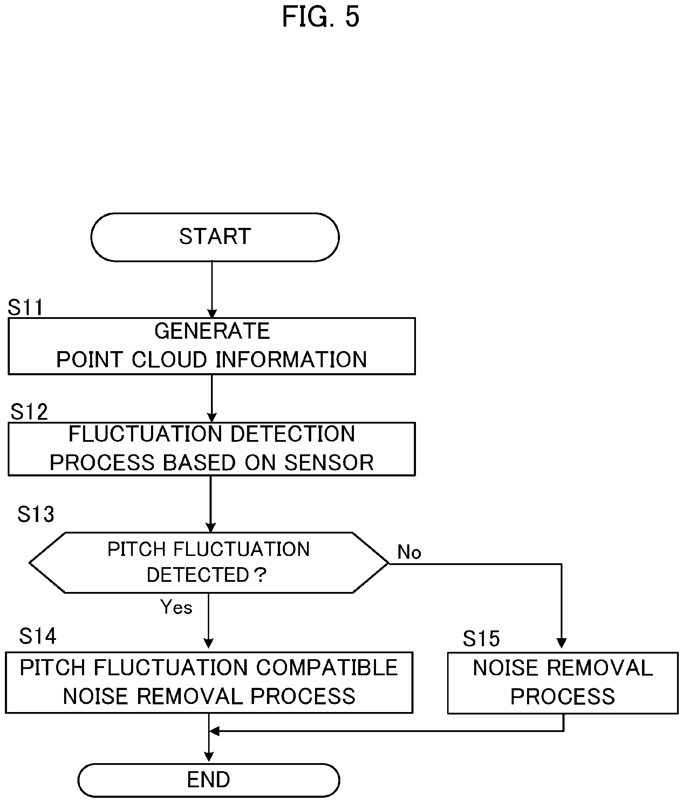

FIG. 5 is an example of a flowchart illustrating a procedure of the point cloud information process according to the second embodiment. The lidar 100A repeatedly executes the point cloud information process at each cycle of generating a frame of point cloud information.

First, the point cloud information generation block 72 generates point cloud information based on the detection signal Sg2 (step S 11). Next, the point cloud information processing block 73 executes the fluctuation detection process based on the detection signal Sg5 outputted by the sensor 9 (step S 12). Thus, the point cloud information processing block 73 accurately detects the fluctuation when the lidar 100 fluctuates in the pitch direction due to the passage of the vehicle through bumps or steps or the like.

Upon detecting the fluctuation in the pitch direction through the fluctuation detection process (step S13;Yes), the point cloud information processing block 73 executes the pitch fluctuation compatible noise removal process that is the removal process of the noise data based on the past frame and the current frame on the assumption that there is a fluctuation in the pitch direction (step S14). In this case, the point cloud information processing block 73 sets the existing fluctuation search range with respect to each valid point in the past frame, and searches for any measured point in the current frame which satisfies the condition that the difference in the measurement distance is equal to or smaller than a predetermined distance. Then, the point cloud information processing block 73 sets, as a valid point, a measured point in the current frame having similar measurement distance to a predetermined or more of measured points in the past frame while setting any other measured point as an invalid point. Further, the point cloud information processing block 73 also performs the process of setting, as an invalid point, any measured point for which the intensity of the reflected light received by the receiving unit 2 is less than a predetermined threshold value, and the process of setting, as an invalid point, any measured point which belongs to a cluster, generated through clustering of measured points, in which the number of elements is equal to or smaller than a predetermined threshold value.

On the other hand, if the fluctuation in the pitch direction is not detected through the fluctuation detection process (step S13; No), the point cloud information processing block 73 executes the normal noise removal process (step S15). In this instance, the point cloud information processing block 73 executes the same noise removal process as the process at step S02 according to the first embodiment.

### <Third Embodiment>

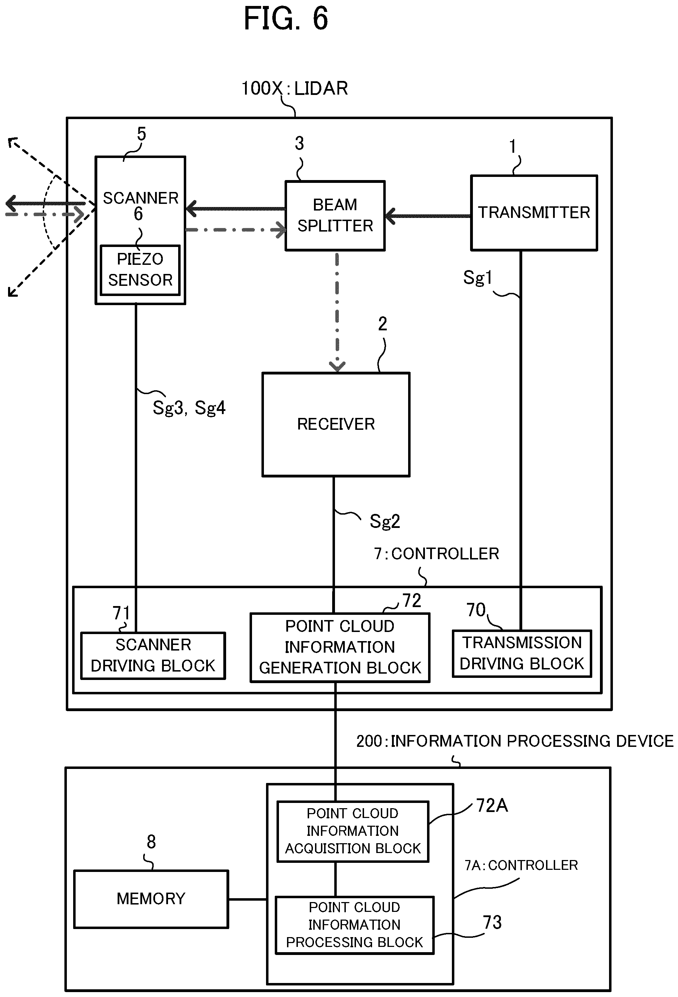

FIG. 6 is a configuration diagram of a lidar system according to the third embodiment. In the third embodiment, a device separate from the lidar 100X is equipped with the function corresponding to the point cloud information processing block 73 of the controller 7. Hereafter, the same components in the third embodiment as in the first embodiment or the second embodiment are appropriately denoted by the same reference numerals as in the first embodiment or the second embodiment, and a description thereof will be omitted.

The lidar system according to the third embodiment includes a lidar 100X and an information processing device 200. In this instance, the lidar 100X supplies the point cloud information generated by the point cloud information generation block 72 to the information processing device 200.

The information processing device 200 includes a controller 7A and a memory 8. The memory 8 stores the data required for the controller 7A to execute the process. The controller 7A functionally includes a point cloud information acquisition block 72A and a point cloud information processing block 73. The point cloud information acquisition block 72A receives the point cloud information generated by the point cloud information generation block 72 of the lidar 100X, and supplies the received point cloud information to the point cloud information processing block 73. The point cloud information processing block 73 performs the same process as the process, which is executed by the point cloud information processing block 73 according to the above-described embodiments on the point cloud information supplied from the point cloud information acquisition block 72A.

The information processing device 200 may be realized by a driving support device. The parameter information necessary for processing may be stored by another device having a memory that can be referenced by the information processing device 200. The configuration according to this modification also enables the information processing device 200 to accurately execute the noise removal of the point cloud information generated by the lidar 100X.

As described above, the controller 7 of the lidar 100 according to the first embodiment or the second embodiment or the controller 7A of the information processing device 200 according to the third embodiment functions as the information processing device according to the present invention, and functionally includes an acquisition means, a detection means, and a processing means. The acquisition means is configured to acquire point cloud information which is a set of data representing a point measured by a measurement device for each measurement direction. The detection means is configured to detect a predetermined degree of fluctuation in the measurement device. The processing means is configured to determine, based on whether the fluctuation is detected or not, a search range for searching for a corresponding point of the point cloud information obtained at the preceding processing time, wherein the corresponding point corresponds to each point of the point cloud information obtained at the current processing time. Thus, even when the fluctuation occurs in the measurement device, it is possible to recognize the correspondence of each point included in the point cloud information between the current processing time and the preceding processing time, and to appropriately execute the noise removal process and tracking process or the like.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

### DESCRIPTION OF REFERENCE NUMERALS

- 1: Transmitter
- 2: Receiver
- 3: Beam splitter
- 5: Scanner
- 6: Piezo sensor
- 7, 7A: Control unit
- 8: Memory
- 100, 100X: Lidar
- 200: Information processing device

## Claims

1. An information processing device comprising:
an acquisition means configured to acquire point cloud information, which is a set of data representing a point measured for each measurement direction by a measurement device;
a detection means configured to detect a predetermined degree or more of fluctuation in the measurement device; and
a processing means configured to determine, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time.

2. The information processing device according to claim 1,
wherein, upon detecting the fluctuation, the processing means is configured to expand the search range in a direction in which the fluctuation occurred.

3. The information processing device according to claim 1 or 2,
wherein the detection means is configured to detect the fluctuation in at least one of a pitch direction, a yaw direction and/or a roll direction of the measurement device.

4. The information processing device according to claim 3,
wherein the processing means is configured to
detect the direction of the fluctuation among positive directions or negative directions of the pitch direction, the yaw direction, or the roll direction, and
expand the search range in a direction opposite to the detected direction.

5. The information processing device according to any one of claims 1 to 4,
wherein the detection means is configured to detect the fluctuation based on the first point cloud information and the second point cloud information.

6. The information processing device according to claim 5,
wherein the detection means is configured to detect the fluctuation
based on a matching result between the first point cloud information and the second point cloud information based on ground points which are the points representing a ground.

7. The information processing device according to claim 5,
wherein the detection means is configured to detect the fluctuation
based on a matching result between the first point cloud information and the second point cloud information based on the points representing measurement distances equal to or longer than a predetermined distance.

8. The information processing device according to any one of claims 1 to 7,
wherein the detection means is configured to detect the fluctuation
based on a detection signal outputted by a sensor, which is provided in the measurement device or a moving object in which the measurement device is provided.

9. A control method executed by an information processing device, the control method comprising:
acquiring point cloud information, which is a set of data representing a point measured for each measurement direction by a measurement device;
detecting a predetermined degree or more of fluctuation in the measurement device; and
determining, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time.

10. A program causing a computer to:
acquire point cloud information, which is a set of data representing a point measured for each measurement direction by a measurement device;
detect a predetermined degree or more of fluctuation in the measurement device; and
determine, based on whether the fluctuation is detected or not, a search range for searching for a point of second point cloud information which corresponds to each point of first point cloud information, wherein the first point cloud information is the point cloud information obtained at a current processing time and the second point cloud information is the point cloud information obtained at a preceding processing time.

11. A storage medium storing the program according to claim 10.
